(19) Europäisches Patentamt
European Patent Office
Office européen des brevets

(11) Veröffentlichungsnummer: **0 155 482**
**A1**

(12) # EUROPÄISCHE PATENTANMELDUNG

(21) Anmeldenummer: 85101246.8

(22) Anmeldetag: 06.02.85

(51) Int. Cl.[4]: C 09 B 29/039
D 06 P 1/18

(30) Priorität: 14.02.84 DE 3405141

(43) Veröffentlichungstag der Anmeldung: 25.09.85 Patentblatt 85/39

(84) Benannte Vertragsstaaten: CH DE FR GB IT LI

(71) Anmelder: BASF Aktiengesellschaft
Carl-Bosch-Strasse 38
D-6700 Ludwigshafen(DE)

(72) Erfinder: Hansen, Guenter, Dr.
Alwin-Mittasch-Platz 8
D-6700 Ludwigshafen(DE)

(72) Erfinder: Schefczik, Ernst, Dr.
Dubliner Strasse 7
D-6700 Ludwigshafen(DE)

(54) **Azofarbstoffe mit Pyridinoisothiazolresten.**

(57) Die Erfindung betrifft Verbindungen der allgemeinen Formel I

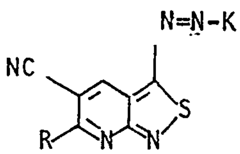

in der

K der Rest einer Kupplungskomponente und

R der rest eines sekundären Amins sind.

Die Reste K der Kupplungskomponenten stammen vorwiegend aus der Anilin- oder Thiazolreihe und entsprechen den Formeln

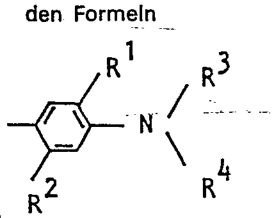

oder

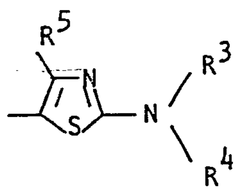

in denen

$R^1$ Wasserstoff, Methyl, Ethyl, Methoxy, Ethoxy oder Chlor,

$R^2$ Wasserstoff, Methyl, Chlor, Alkoxy oder Acylamino

$R^3$ und $R^4$ unabhängig voneinander Wasserstoff oder gegebenfalls substituiertes Alkyl, Alkenyl, Alkinyl, Cycloalkyl, Aralkyl oder Aryl mit vorzugsweise 1 bis 8 C-Atomen und in Azofarbstoffen üblichen Substituenten, $R^3$ und $R^4$ zusammen mit dem Stickstoff der Rest eines Heterocyclus und

$R^5$ Wasserstoff, Hydroxy, gegebenenfalls substituiertes Alkyl, Alkenyl, Cycloalkyl, Aralkyl, Aryl oder Hetaryl sind.

Die erfindungsgemäßen Verbindungen eigenen sich sehr gut zum Färben textiler Fasern.

EP 0 155 482 A1

0155482

BASF Aktiengesellschaft O.Z. 0050/36960

Azofarbstoffe mit Pyridinoisothiazolresten

Die Erfindung betrifft Verbindungen der allgemeinen Formel I

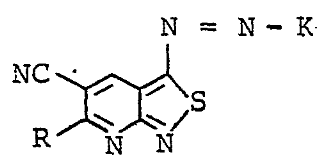

in der

K der Rest einer Kupplungskomponente und
R der Rest eines sekundären Amins sind.

Die Reste K der Kupplungskomponenten stammen vorwiegend aus der Anilin- oder Thiazolreihe und entsprechen den Formeln

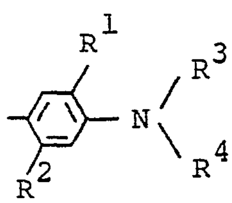

oder

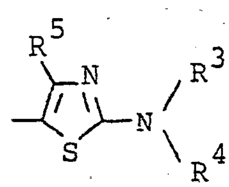

,

in denen

$R^1$ Wasserstoff, Methyl, Ethyl, Methoxy, Ethoxy oder Chlor,
$R^2$ Wasserstoff, Methyl, Chlor, Alkoxy oder Acylamino
$R^3$ und $R^4$ unabhängig voneinander Wasserstoff oder gegebenfalls substituiertes Alkyl, Alkenyl, Alkinyl, Cyclo-

Bg/P

alkyl, Aralkyl oder Aryl mit vorzugsweise 1 bis 8 C-Atomen und in Azofarbstoffen üblichen Substituenten, $R^3$ und $R^4$ zusammen mit dem Stickstoff der Rest eines Heterocyclus und

$R^5$ Wasserstoff, Hydroxy, gegebenenfalls substituiertes Alkyl, Alkenyl, Cycloalkyl, Aralkyl, Aryl oder Hetaryl sind.

Insbesondere sind als Reste $R^3$ und $R^4$ $C_1$- bis $C_8$-Alkyl, gegebenenfalls durch Cyan, Hydroxy, Alkoxy mit 1 bis 8 C-Atomen, Phenoxy, Phenoxyäthoxy oder Benzyloxy substituiertes Alkyl, Allyl, Cyclohexyl, Benzyl, Phenyläthyl, Phenylhydroxyäthyl, Phenylpropyl, Phenylbutyl, gegebenenfalls durch Chlor, Methyl, Methoxy oder Äthoxy substituiertes Phenyl sowie Polyalkoxyalkyl, Hydroxypolyalkoxyalkyl, Alkanoyloxyalkyl oder Alkoxycarbonylalkyl der nachstehend genannten Art zu nennen.

Einzelne Reste $R^3$ und $R^4$ sind neben den bereits genannten beispielsweise Methyl, Äthyl, Propyl, Butyl, ß-Hydroxyäthyl oder -propyl, γ-Hydroxypropyl, ω-Hydroxyhexyl, ß-$C_1$- bis $C_4$-Alkoxycarbonyläthyl sowie die Reste der Formeln

$-CH_2-CH_2-O-CH_2-CH_2-OH$, $-(CH_2)_3-O-(CH_2)_4-OH$,

$-(CH_2)_3-O-(CH_2)_6-OH$,

$-CH(CH_3)-(CH_2)_3-C(CH_3)_2-OH$, $CH_2-CH(OH)-C_6H_5$, $CH_2CH_2CN$,

$CH_2CH_2OCONH(C_1$- bis $C_4$-Alkyl), $CH_2-CH(CH_3)-O-C_6H_5$, $-CH_2-CH(CH_3)-C_6H_5$,

$-(CH_2)_3-O-CH_2-C_6H_5$, $-CH_2-CH_2-O-CH_3$,

$(CH_2)_3(OC_2H_4)_2OCH_3$

$-(CH_2)_3-O-CH(CH_3)_2$

und die Acyloxyalkylreste der Formeln

$-CH_2-CH_2-O-Acyl$, $-(CH_2)_3-O-Acyl$, $-CH_2-CH(CH_3)-O-Acyl$,

$-(CH_2)_2-O-(CH_2)_2-O-Acyl$

wobei Acyl beispielsweise $-CHO$, $-COCH_3$ oder $-COCH_2-O-C_6H_5$ sein kann. Acylreste sind ferner COOB und CONHB, wobei B Methyl oder Phenyl ist.

Bei den Thiazolen als Kupplungskomponenten sind für $R^3$ und $R^4$ besonders hervorzuheben Wasserstoff, Methyl, Ethyl, Propyl, Butyl, Allyl, Benzyl, Cyclohexyl, ß-Ethoxycarbonyläthyl, ß-Hydroxyalkyl, ß-Acetoxyethyl oder Phenyl.

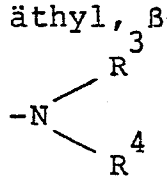 bedeutet auch den Rest des Morpholins, Pyrrolidins oder Piperidins.

Einzelne Reste $R^5$ sind beispielsweise:

Phenyl, p-Chlorphenyl, p-Bromphenyl, 3,4-Dichlorphenyl, 2,4-Dichlorphenyl, p-Tolyl, 3-Chlor-4-methylphenyl, 2-Chlor-4-methylphenyl, m- und o-Tolyl, 3,5-Dichlorphenyl, 4-Äthyl-phenyl, 4-Butylphenyl, 4-Methoxyphenyl, 4-Methoxy-3-chlorphenyl, 4-Methoxy-3-nitrophenyl, 4-Methoxy-3,5-dichlorphenyl, 4-Methoxy-3,5-dibromphenyl, 4-Alkyloxy-3-chlorphenyl, 4-Äthoxycarbonyläthoxy-3-chlorphenyl, 4-Alkyloxy-3-chlorphenyl, 4-Methylsulfonylphenyl, 4-Methoxycarbonylphenyl, 2-Äthoxycarbonylphenyl, 2-Butoxycarbonylphenyl, 2-Äthoxycarbonyl-4-nitrophenyl, 3-Nitrophenyl, 4-Cyanphenyl, 4-N-Äthylcarbamoylphenyl oder 2-Äthoxycarbonyl-3,4,5,6-tetrachlorphenyl, 4-Butylmercaptophenyl, 4-ß-Cyanäthoxyphenyl und 4-Methoxycarbonylphenyl.

Heterocyclische Reste $R^5$ sind z.B. abgeleitet von Furan-, Thiophen-, Thiazol-, Pyrrol-, Indol-, Dioxolan-, Thiophthen- Pyridin- oder Chinolinderivaten, die noch durch Fluor, Chlor, Brom, ggf. substituiertes $C_1$- bis $C_8$-Alkyl, $C_3$- bis $C_5$-Alkenyl, $C_7$- bis $C_{10}$-Aralkyl oder Phenyl, $C_1$- bis $C_8$-Alkoxy, $C_1$- bis $C_8$-Alkylmercapto, Nitro, Cyan, $C_1$- bis $C_8$-Alkoxycarbonyl, $C_1$-bis $C_8$-Alkylsulfonyl, Dialkylamino oder Acylamino substituiert sein können.

Einzelne Reste $R^5$ sind z.B.:

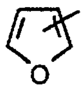 , 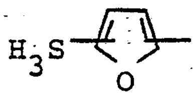 , 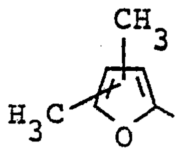 , 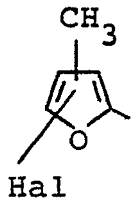 , 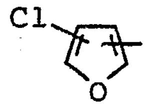 , 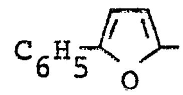 ,

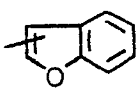 , 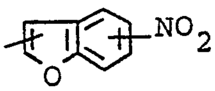 , 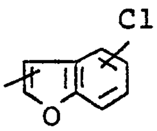 , 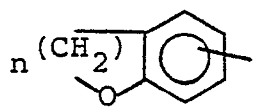 , 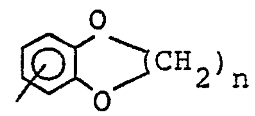

n = 2-4    n = 1-3

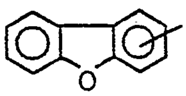 , 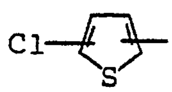 , 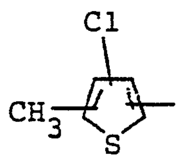 , 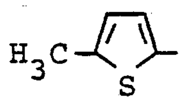 , 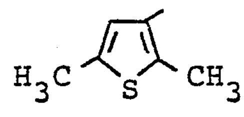

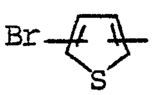 , 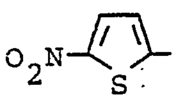 , 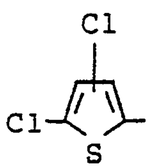 , 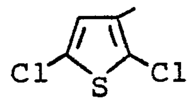 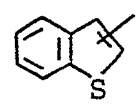 ,

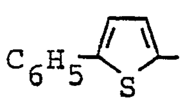 , 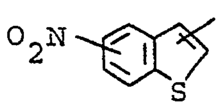 , 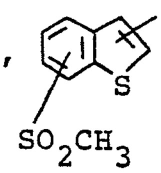 , 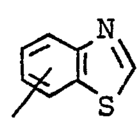 , 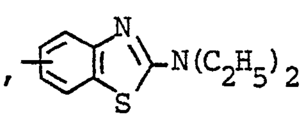

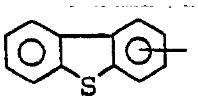 , 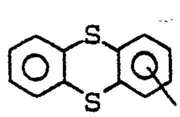 , 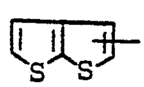 , 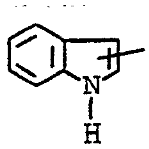 , 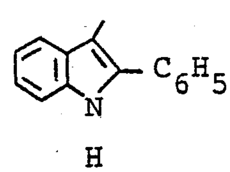

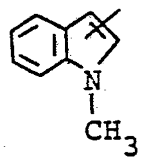 , 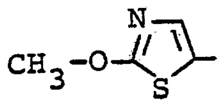 , 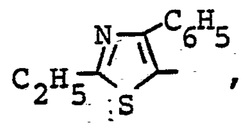 , 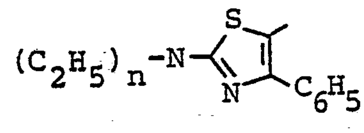 ,

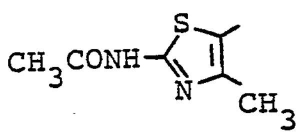 , 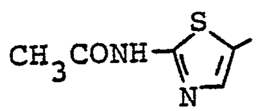 , 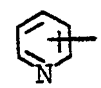 or 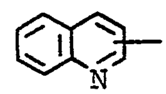 .

Als $R^5$ sind besonders bevorzugt:

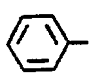 , 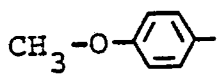 , 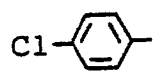 ,

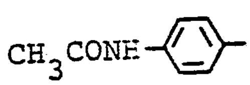 , 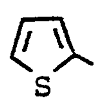 , 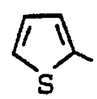 ,

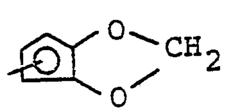 , 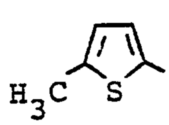 , 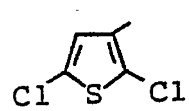 oder

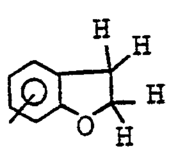

Die Reste R entsprechen ebenfalls der Formel $-N\genfrac{}{}{0pt}{}{R^3}{R^4}$, wobei allerdings $R^3$ und $R^4$ nicht Wasserstoff sind.

Als Reste R seien im einzelnen aufgeführt:

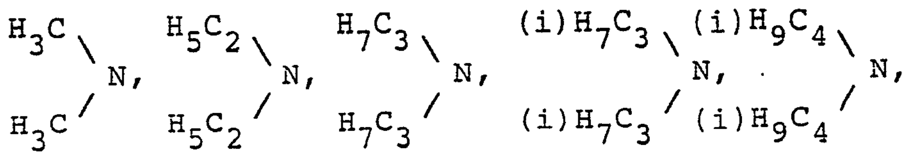

$[(CH_3)_2CHCH_2]_2N$,

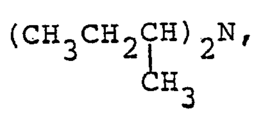

$[CH_3(CH_2)_5]_2N$,

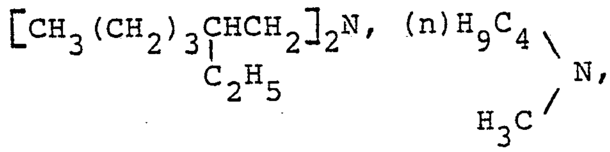

$[CH_3(CH_2)_3]_2N$,

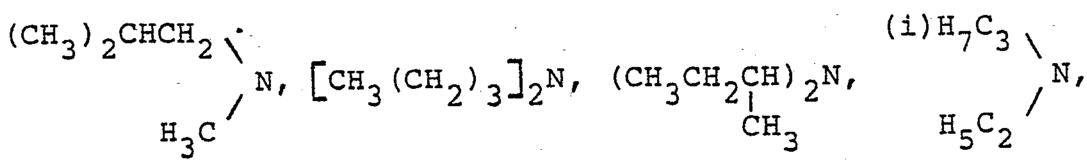

$(CH_3OCH_2CH_2)_2N$,

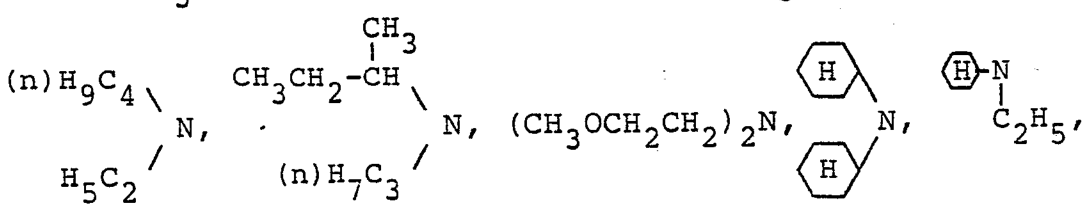

$(HOCH_2CH_2)_2N$,

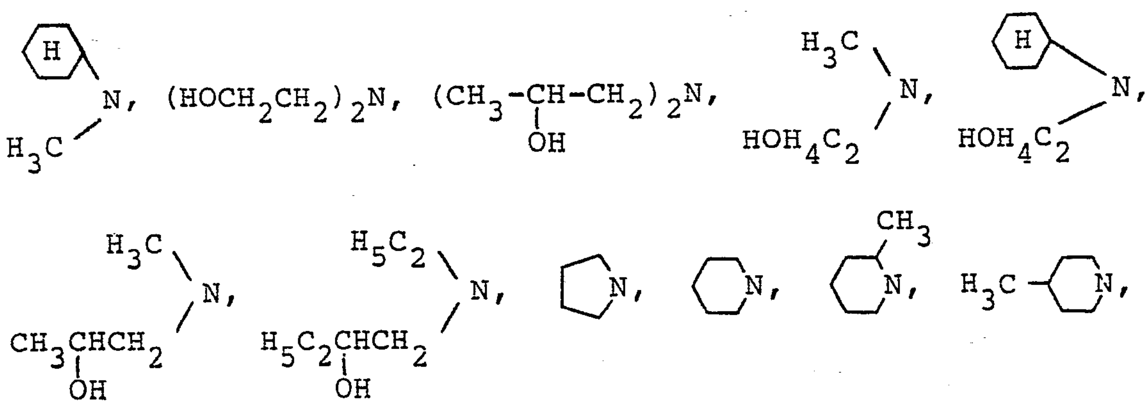

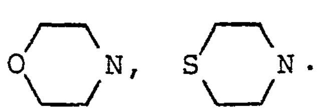

Bevorzugt sind als Reste R:
Pyrrolidin-, Piperidin-, Morpholin und Thiomorpholin.

Zur Herstellung der Verbindungen der Formel I kann man eine Diazoniumverbindung von Aminen der Formel II

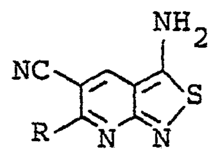

II

mit einer Kupplungskomponente der Formel

HK

nach an sich bekannten Methoden umsetzen. Einzelheiten der Herstellung können den Beispielen entnommen werden, in denen sich Angaben über Teile und Prozente, sofern nichts anders vermerkt, auf das Gewicht beziehen.

Die Diazokomponenten der Formel II erhält man aus den literaturbekannten Verbindungen

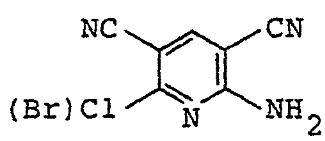

durch Austausch des Halogens gegen den Rest 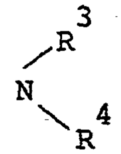 ,

Anlagerung von Schwefelwasserstoff an die zu $NH_2$ orthoständige Nitrilgruppe und oxidativen Ringschluß der o-Aminothioamide.

Die Verbindungen der Formel I eignen sich im wesentlichen als Farbstoffe für synthetische Polyester und Mischgewebe aus Polyester und Baumwolle. Man erhält je nach Substituenten rote bis grünblaue Färbungen mit guten Echtheiten.

Von besonderer Bedeutung sind Verbindungen der Formel Ia

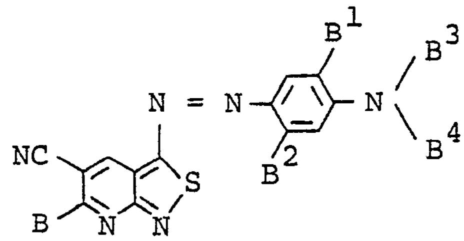

Ia,

in der

$B^1$ Wasserstoff, Methyl, Methoxy oder Chlor,

$B^2$ Wasserstoff, Methyl, $C_1$- bis $C_3$-Alkanoylamino oder Benzoylamino,

$B^3$ und $B^4$ Methyl, Äthyl, ß-Cyanäthyl, ß-Hydroxyäthyl, ß-Carbomethoxyäthyl, ß-Acetoxyäthyl, Benzyl oder ß-Phenyläthyl und

B Morpholino, Pyrrolidino oder Piperidino bedeuten.

Weiterhin sind wertvoll Verbindungen der Formel

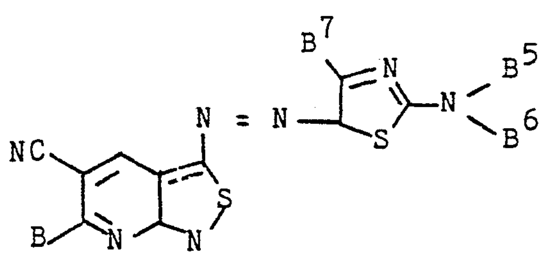

,

in der

$B^5$ und $B^6$ unabhängig voneinander $C_1$- bis $C_4$-Alkyl, Allyl, $C_1$- bis $C_4$-Alkoxycarbonylethyl, Hydroxy-$C_2$-

oder $-C_3$-alkyl oder $C_2$- bis $C_4$-Alkanoyloxyalkyl,

$B^5$ und $B^6$ zusammen mit dem Stickstoff Pyrrolidino-, Piperidino oder Morpholino und

$B^7$ gegebenenfalls durch Chlor, Brom, $C_1$- bis $C_4$-Alkoxy, $C_1$- bis $C_4$-Alkyl, $C_1$- bis $C_4$-Alkylsulfonyl oder $C_1$- bis $C_4$-Alkoxycarbonyl substituiertes Phenyl oder Thienyl sind und

B die für Anspruch 3 angegebene Bedeutung hat.

Beispiel 1

13 Teile 3-Amino-5-cyano-6-piperidino-isothiazolo[3,4-b]-pyridin werden in 16 Teilen o-Phosphorsäure (80 %ig) und 60 Teilen Eisessig/Propionsäure im Verhältnis 17:3 bei 0 bis 5 °C gelöst und 4 Stunden bei der angegebenen Temperatur gerührt. Die so erhaltene Diazonium-Lösung läßt man im Laufe von 30 Minuten zu einer Lösung aus

7 Teilen Diäthylanilin
25 Teilen einer 20 %igen Salzsäure
100 Teilen Wasser und
300 Teilen Eis laufen.

Man rührt über Nacht, saugt den ausgefallenen Farbstoff ab, wäscht ihn mit Wasser neutral und trocknet ihn bei 80 °C. Das erhaltene blauschwarze Produkt färbt Polyestergewebe in kräftigen Dunkelblautönen von hoher thermischer Beständigkeit.

Analog Beispiel 1 erhält man auch die in der folgenden Tabelle durch Diazo- und Kupplungskomponenten gekennzeichneten Farbstoffe.

| Bsp. | Diazokomponente | Kupplungskomponente | Farbton auf Polyester |
|---|---|---|---|
| 2 | 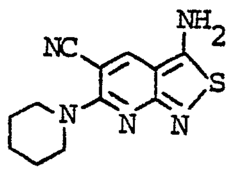 | 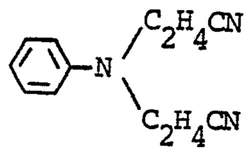 | rot |
| 3 | " | 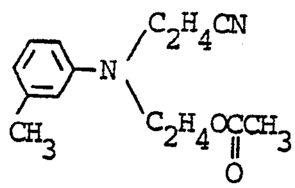 | rotviolett |
| 4 | " | 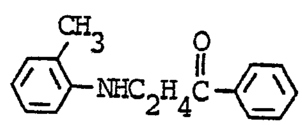 | rotviolett |
| 5 | " | 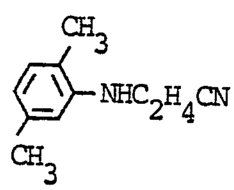 | bordo |
| 6 | " | 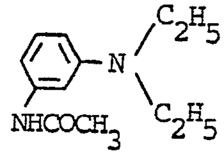 | blau |
| 7 | 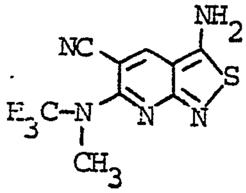 | 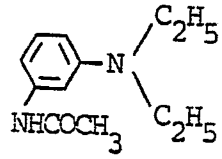 | türkis |
| 8 | " | 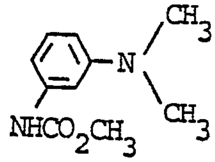 | blau |

| Bsp. | Diazokomponente | Kupplungskomponente | Farbton auf Polyester |
|---|---|---|---|
| 9 | 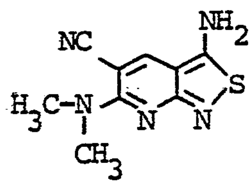 | 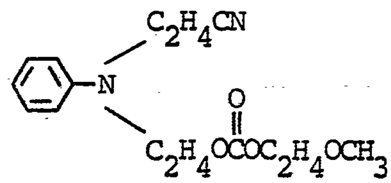 | rotviolett |
| 10 | " | 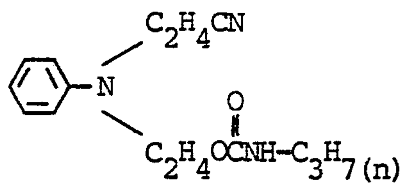 | violett |
| 11 | " | 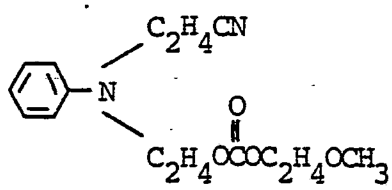 | violett |
| 12 | 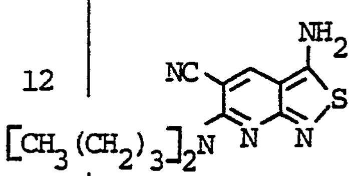 | 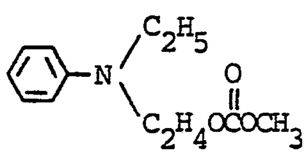 | violett |
| 13 | " | 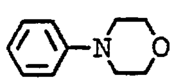 | dunkel-blau |
| 14 | " | 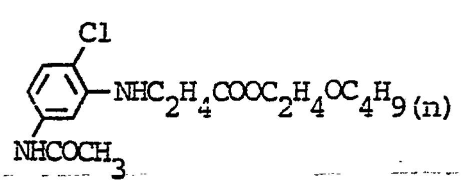 | blau |

| Bsp. | Diazokomponente | Kupplungskomponente | Farbton auf Polyester |
|---|---|---|---|
| 15 | 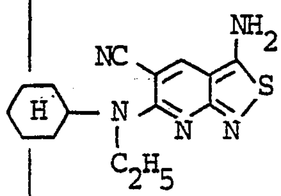 | 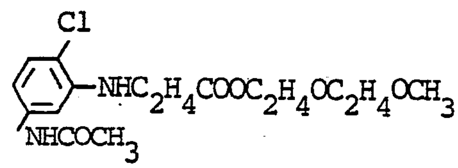 | blau |
| 16 | " | 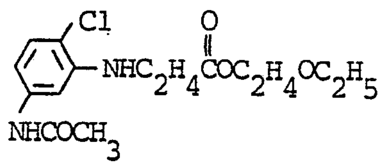 | blau |
| 17 | " | 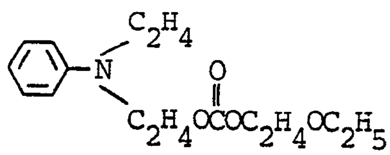 | violett |
| 18 | 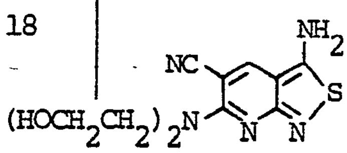 | 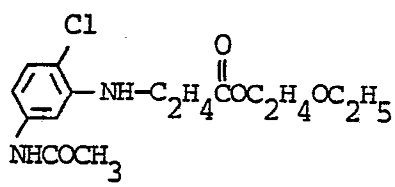 | blau |
| 19 | " | 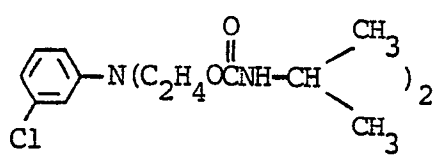 | bordo |
| 20 | " | 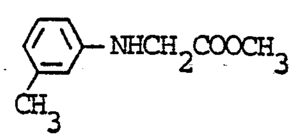 | rotviolett |
| 21 | 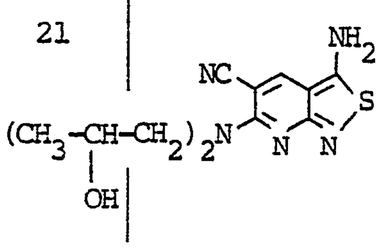 | 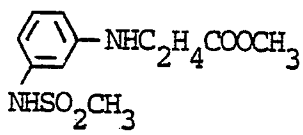 | blauviolett |

| Bsp. | Diazokomponente | Kupplungskomponente | Farbton auf Polyester |
|---|---|---|---|
| 22 | 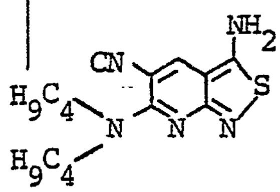 | 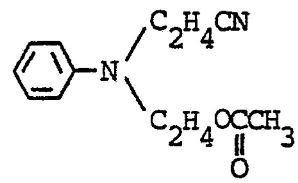 | rotviolett |
| 23 | " | 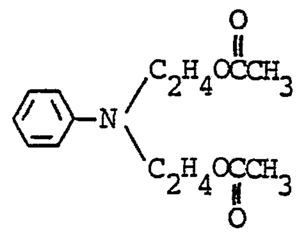 | marineblau |
| 24 | " | 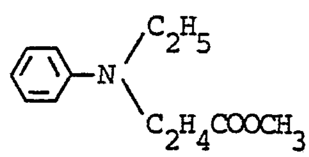 | violett |
| 25 | " | 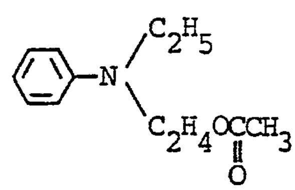 | violett |
| 26 | " | 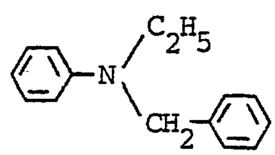 | dunkelblau |
| 27 | 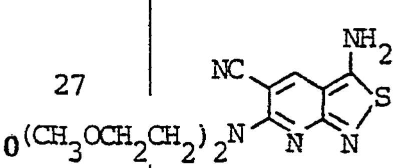 | 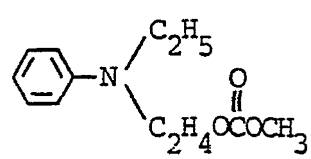 | violett |
| 28 | " | 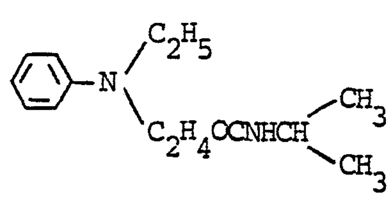 | blauviolett |

| Bsp. | Diazokomponente | Kupplungskomponente | Farbton auf Polyester |
|---|---|---|---|
| 29 | 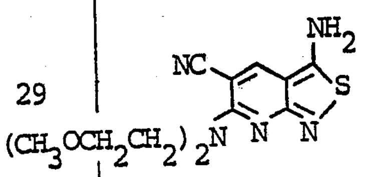 | 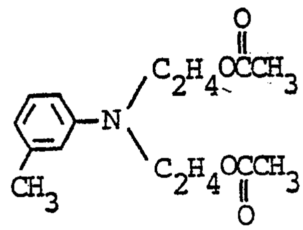 | marineblau |
| 30 | 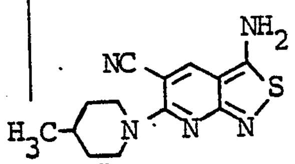 | 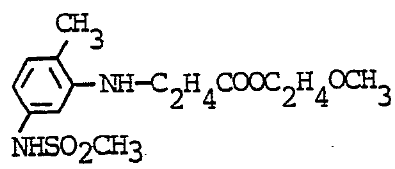 | blau |
| 31 | " | 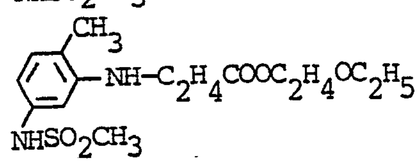 | blau |
| 32 | " | 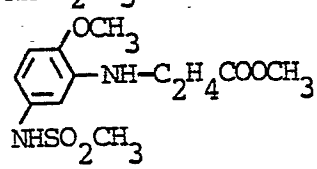 | blau |
| 33 | 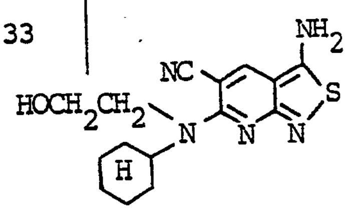 | 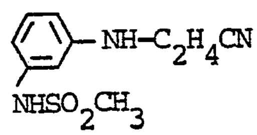 | marineblau |
| 34 | " | 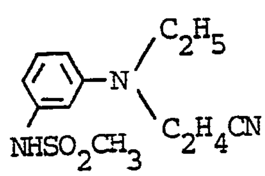 | blau |
| 35 | " | 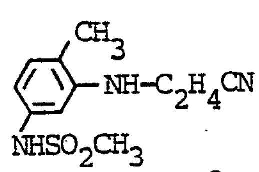 | blau |
| 36 | 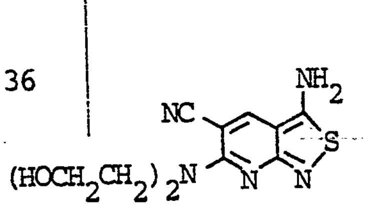 | 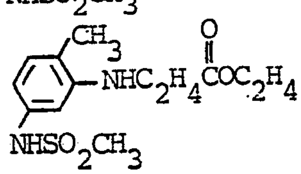 | blau |

| Bsp. | Diazokomponente | Kupplungskomponente | Farbton auf Polyester |
|---|---|---|---|
| 37 | 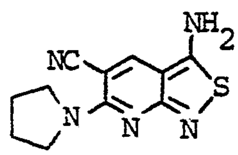 | 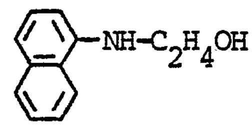 | blaugrau |
| 38 | " | 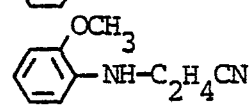 | bordo |
| 39 | " | 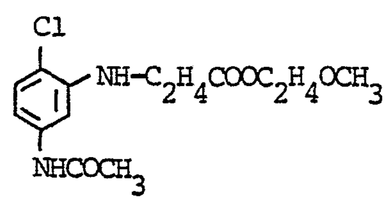 | violett |
| 40 | " | 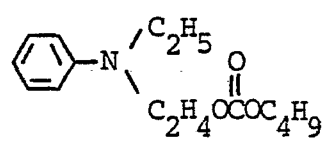 | violett |
| 41 | " | 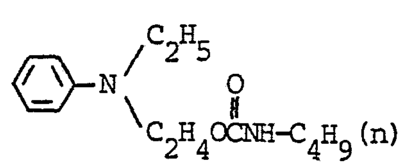 | blauviolett |
| 42 | " | 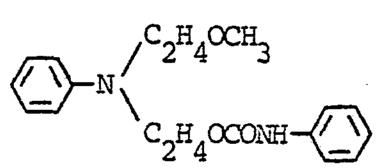 | marineblau |
| 43 | " | 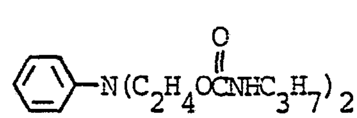 | blauviolett |

| Bsp. | Diazokomponente | Kupplungskomponente | Farbton auf Polyester |
|---|---|---|---|
| 44 | 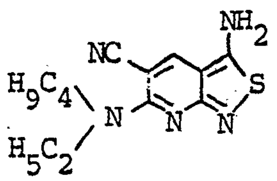 | 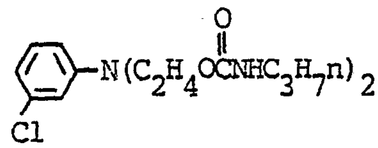 | bordo |
| 45 | " | 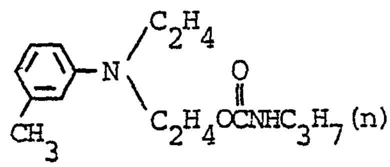 | rotviolett |
| 46 | " | 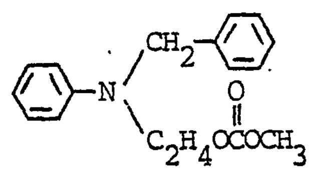 | blauviolett |
| 47 | " | 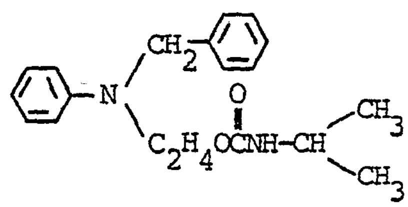 | marineblau |
| 48 | " | 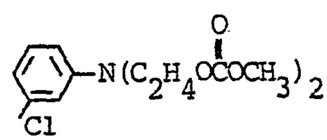 | violett |
| 49 | 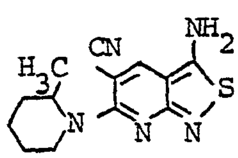 | 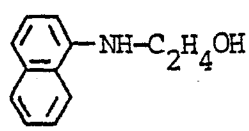 | blaugrau |
| 50 | " | 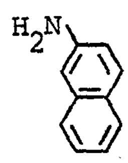 | bordo |
| 51 | " | 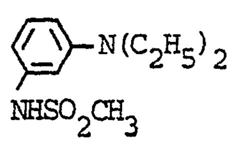 | blau |
| 52 | " | 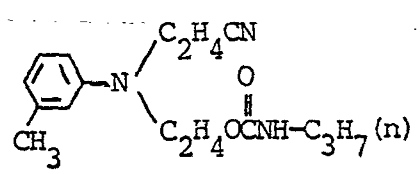 | rotviolett |

| Bsp. | Diazokomponente | Kupplungskomponente | Farbton auf Polyester |
|---|---|---|---|
| 53 | 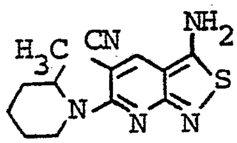 | 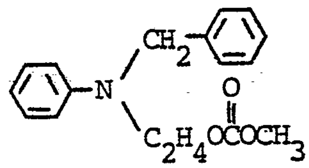 | marineblau |
| 54 | " | 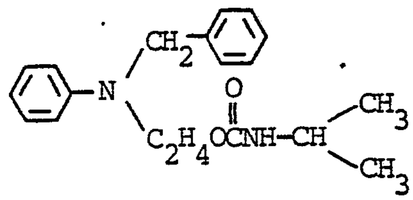 | dunkelblau |
| 55 | 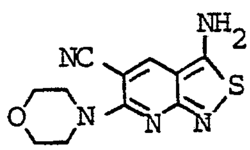 | 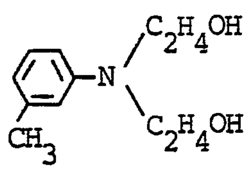 | blau |
| 56 | " | 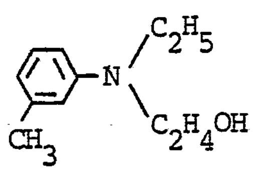 | blau |
| 57 | " | 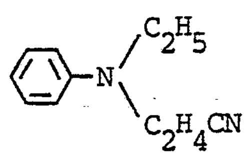 | bordo |
| 58 | " | 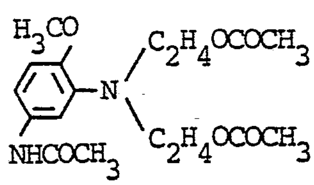 | blau |
| 59 | | 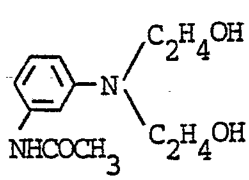 | blau |
| 60 | " | 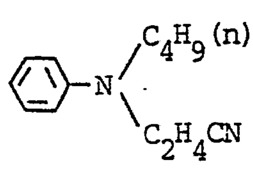 | rotviolett |

Beispiel 61

13 Teile 3-Amino-5-cyano-6-piperino-isothiazolo[3,4-b]-pyridin werden bei 10 bis 15 °C in 70 Teile 85 %ige Schwefelsäure eingetragen. Bei 0 bis 5 °C werden dann 14,8 Teile einer 12,8 % $N_2O_3$ enthaltenden Nitrosylschwefelsäure zugegeben. Nach 3- bis 4stündigem Rühren bei 0 - 5 °C wird der Überschuß an Nitrit mit Amidosulfonsäure entfernt und die Diazoniumlösung mit einer Lösung aus 11,9 Teilen 2-Diäthylamino-4-thienyl-(2)-thiazol in 50 Teilen Dimethylformamid, 5 Teilen eines Kondensationsproduktes aus 23 Mol Äthylenoxid und einem teilweise ungesättigten Fettalkoholgemisch und 300 Teilen Eis vereinigt. Nach mehrstündigem Rühren wird der Farbstoff abgesaugt, mit Wasser neutral gewaschen und bei 50 °C im Vakuum getrocknet. Man erhält 22 Teile eines dunklen Pulvers, das Polyester in echten grünen Tönen färbt.

| Bsp. | Diazokomponente | Kupplungskomponente | Farbton auf Polyester |
|---|---|---|---|
| 62 | 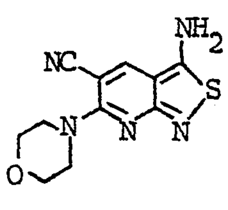 | 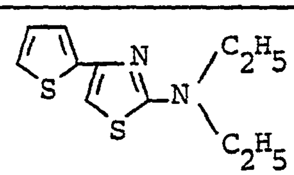 | grün |
| 63 | " | 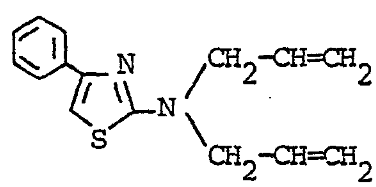 | grün |
| 64 | " | 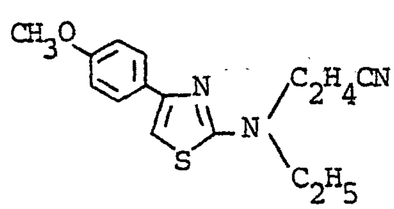 | grün |

| Bsp. | Diazokomponente | Kupplungskomponente | Farbton auf Polyester |
|---|---|---|---|
| 65 | 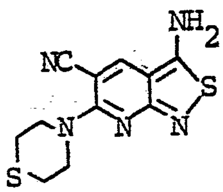 | 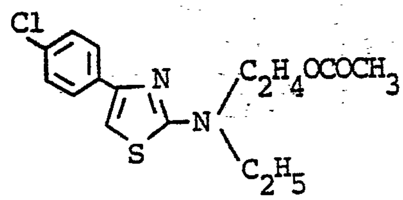 | grün |
| 66 | " | 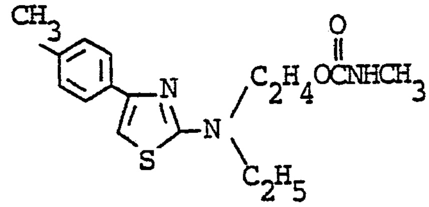 | grün |
| 67 | " | 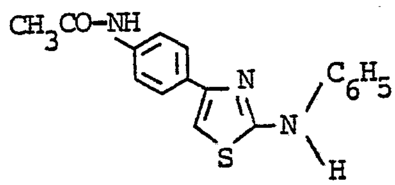 | grün |
| 68 | 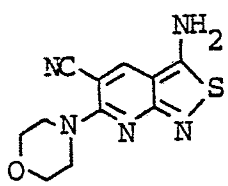 | 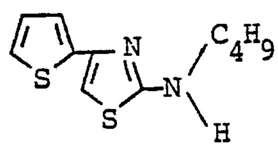 | grün |
| 69 | " | 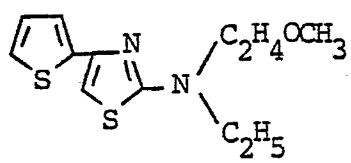 | grün |
| 70 | " | 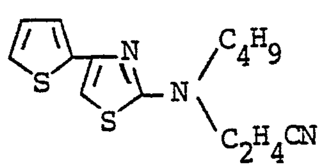 | grün |
| 71 | " | 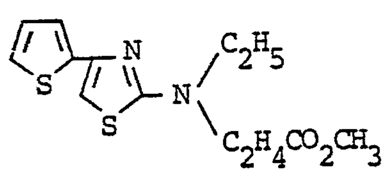 | grün |

Patentansprüche

1. Verbindungen der allgemeinen Formel

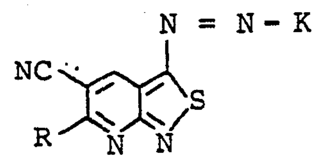

in der

K der Rest einer Kupplungskomponente und
R der Rest eines sekundären Amins sind.

2. Verbindungen gemäß Anspruch 1, bei denen K den Formeln

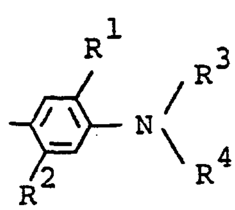

oder

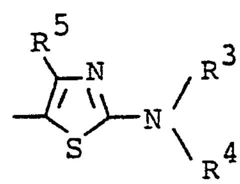

,

entspricht, in denen

$R^1$ Wasserstoff, Methyl, Ethyl, Methoxy, Ethoxy oder Chlor,
$R^2$ Wasserstoff, Methyl, Chlor, Alkoxy oder Acylamino
$R^3$ und $R^4$ unabhängig voneinander Wasserstoff oder gegebenenfalls substituiertes Alkyl, Alkenyl, Alkinyl, Cycloalkyl, Aralkyl oder Aryl mit vorzugsweise 1 bis 8 C-Atomen und in Azofarbstoffen üblichen Substituenten, $R^3$ und $R^4$ zusammen mit dem Stickstoff der Rest eines Heterocyclus und

$R^5$ Wasserstoff, Hydroxy, gegebenenfalls substituiertes Alkyl, Alkenyl, Cycloalkyl, Aralkyl, Aryl oder Hetaryl sind.

3. Verbindungen gemäß Anspruch 1 der Formel

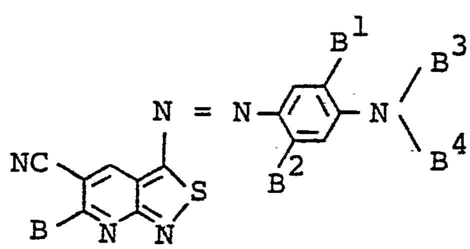 Ia,

in der

$B^1$ Wasserstoff, Methyl, Methoxy oder Chlor,

$B^2$ Wasserstoff, Methyl, $C_1$- bis $C_3$-Alkanoylamino oder Benzoylamino,

$B^3$ und $B^4$ Methyl, Äthyl, ß-Cyanäthyl, ß-Hydroxyäthyl, ß-Carbomethoxyäthyl, ß-Acetoxyäthyl, Benzyl oder ß-Phenyläthyl und

B Morpholino, Pyrrolidino oder Piperidino bedeuten.

4. Verbindungen gemäß Anspruch 1 der Formel

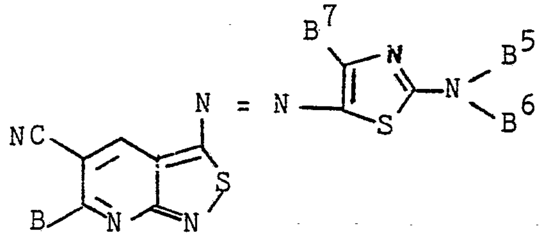 ,

in der

$B^5$ und $B^6$ unabhängig voneinander $C_1$- bis $C_4$-Alkyl,

Allyl, $C_1$- bis $C_4$-Alkoxycarbonylethyl, Hydroxy-$C_2$- oder -$C_3$-alkyl oder $C_2$- bis $C_4$-Alkanoyloxyalkyl,

$B^5$ und $B^6$ zusammen mit dem Stickstoff Pyrrolidino-, Piperidino oder Morpholino und

$B^7$ gegebenenfalls durch Chlor, Brom, $C_1$- bis $C_4$-Alkoxy, $C_1$- bis $C_4$-Alkyl, $C_1$- bis $C_4$-Alkylsulfonyl oder $C_1$- bis $C_4$-Alkoxycarbonyl substituiertes Phenyl oder Thienyl sind und

B die für Anspruch 3 angegebene Bedeutung hat.

5. Verwendung der Verbindungen gemäß Anspruch 1 zum Färben textiler Fasern.

Europäisches Patentamt

# EUROPÄISCHER RECHERCHENBERICHT

0155482

Nummer der Anmeldung

EP 85 10 1246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | DE-A-3 302 097 (BASF)<br>* Anspruch; Seite 2, Zeile 30 *<br>--- | 1 | C 09 B 29/039<br>D 06 P 1/18 |
| A | CHEMICAL ABSTRACTS, Band 100, Nr. 14, April 1984, Seite 86, Nr. 105094v, Columbus, Ohio, US; & JP - A - 58 179 267 (GOSEI SENRYO GIJUTSU KENKYU KUMIAI) 20.10.1983<br>----- | 1 | |
| | | | RECHERCHIERTE SACHGEBIETE (Int. Cl.4) |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 23-05-1985 | GINESTET M.E.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82